Europäisches Patentamt

European Patent Office

Office européen des brevets

(19)

(11) Veröffentlichungsnummer : **0 105 055**
**B1**

(12) EUROPÄISCHE PATENTSCHRIFT

(45) Veröffentlichungstag der Patentschrift :
30.12.86

(21) Anmeldenummer : 82109108.9

(22) Anmeldetag : 02.10.82

(51) Int. Cl.⁴ : **A 01 B 73/00**

(54) Transportwagen zur Aufnahme einer Erntebergungsvorrichtung.

(43) Veröffentlichungstag der Anmeldung :
**11.04.84 Patentblatt 84/15**

(45) Bekanntmachung des Hinweises auf die Patenterteilung : **30.12.86 Patentblatt 86/52**

(84) Benannte Vertragsstaaten :
**BE DE FR GB IT SE**

(56) Entgegenhaltungen :
**DE-A- 2 311 721**
**US-A- 3 245 695**
**US-A- 3 413 014**
**US-A- 3 608 753**

(73) Patentinhaber : **DEERE & COMPANY**
**1 John Deere Road**
**Moline Illinois 61265 (US)**

(72) Erfinder : **Lopez, Antonio Perrez**
**Thomas-Mann-Strasse 3**
**D-6662 Contwig 1 (DE)**
Erfinder : **Uhlendorff, Dieter**
**Heckfelderstrasse 9**
**D-6660 Zweibrücken 15 (DE)**

(74) Vertreter : **Sartorius, Peter et al**
**DEERE & COMPANY European Office, Patent Depart-**
**ment Postfach 503 Steubenstrasse 36-42**
**D-6800 Mannheim 1 (DE)**

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung bezieht sich auf einen Transportwagen zur Aufnahme einer Erntebergungsvorrichtung von Erntemaschinen, insbesondere Mähdrescher, mit auf einem Längsträger angeordneten, muldenförmig ausgerichteten Lagerböcken, auf die die Erntebergungsvorrichtung ablegbar und mittels eines Kupplungsteiles sicherbar ist.

Es ist bereits ein Transportwagen bekannt (Ersatzteilliste Claas-Mercator, Bildtafel 140), der aus einem Längsträger besteht, an dem eine Laufräderachse angeordnet ist. Auf dem Längsträger ist ein muldenförmiger Lagerbock vorgesehen, der zur Aufnahme der Erntebergungsvorrichtung dient. Am oben liegenden Ende des Lagerbockes befindet sich eine verschwenkbare Befestigungsvorrichtung mit einer Spindelmutter, die bei abgelegter Erntebergungsvorrichtung an diese heranschwenkbar ist, damit die Erntebergungsvorrichtung auf dem Transportwagen gesichert werden kann. Zur zusätzlichen Sicherung der Erntebergungsvorrichtung dient ferner eine Kette, die im Bereich der Anhängevorrichtung an dem Längsträger angeschlossen ist und mit der Erntebergungsvorrichtung verbunden werden kann. Eine derartige Sicherung der Erntebergungsvorrichtung auf dem Transportwagen ist sehr zeitaufwendig, zumal die Erntebergungsvorrichtung sehr genau zum Transportwagen ausgerichtet werden muß, um die einzelnen Kupplungsglieder mit der Erntebergungsvorrichtung verbinden zu können.

Ferner ist ein Transportwagen zur Aufnahme einer Erntebergungsvorrichtung bekannt (US-A-3 608 753), bei dem an einem feststehenden Teil ein laschenförmiger Kupplungsteil derart angeordnet ist, daß er beim Absenkvorgang der Erntebergungsvorrichtung mit einem das Gegenstück bildenden Querträger selbsttätig verbindbar ist und die Erntebergungsvorrichtung gegen Verstellen sichert. Die Lasche, die die Form eines Hakens aufweist, bietet infolge ihrer Spielverbindung bzw. ihres relativ großen Abstandes keine ratterfreie Verbindung zwischen dem Ladefahrzeug und der Erntebergungsvorrichtung.

Demgegenüber liegt der Erfindung die Aufgabe zugrunde, den Transportwagen und die Erntebergungsvorrichtung derart auszubilden und anzuordnen, daß auf einfache Weise die Erntebergungsvorrichtung auf dem Transportwagen derart arretierbar ist, daß dadurch eine spielfreie Verbindung zwischen Erntebergungsvorrichtung und Transportwagen sichergestellt wird. Diese Aufgabe ist dadurch gelöst worden, daß zumindest an einem feststehenden Teil des Transportwagens ein als aufwärts geneigte Lasche ausgebildeter Kupplungsteil derart angeordnet ist, daß er beim Absenkvorgang der Erntebergungsvorrichtung mit einem U-profilförmigen, als Querträger ausgebildeten Gegenstück selbsttätig verbindbar ist, das mit einem Schenkel an die Erntebergungsvorrichtung angeschlossen ist und mit seinem anderen Schenkel den Kupplungsteil von oben her untergreift. Durch die vorteilhafte Ausbildung des U-profilförmigen Querträgers, der als Fangausnehmung die Lasche übergreift, wird auf einfache Weise beim Absenkvorgang der Erntebergungsvorrichtung auf den Transportwagen der U-profilförmige Querträger über die Lasche geschoben, so daß diese von zwei Seiten umgeben wird und somit eine ratterfreie bzw. spielfreie Verbindung zwischen dem Transportwagen und der Erntebergungsvorrichtung geschaffen wird. Somit braucht die Bedienungsperson nicht mehr den Mähdrescher zu verlassen, wenn sie die Erntebergungsvorrichtung auf den Transportwagen absenkt und absichert. Hierzu ist es vorteilhaft, daß an zwei mit Abstand zueinander angeordneten, auf dem Transportwagen vorgesehenen Lagerböcken je ein als Lasche ausgebildeter Kupplungsteil angeordnet ist, auf den je ein an der Erntebergungsvorrichtung vorgesehenes U-förmiges Gegenstück aufschiebbar ist, und daß das U-förmige Gegenstück im Bereich der Einlaßseite der Erntebergungsvorrichtung und die zugehörige Lasche im Bereich des äußeren Endes des entsprechenden Lagerbockes angeordnet sind. Durch die Verwendung zweier mit Abstand zueinander angeordneter Lagerböcke und Kupplungsteile, die mit den entsprechenden U-förmig ausgebildeten Querträgern bzw. den Fangausnehmungen verbindbar sind, wird eine einwandfreie und noch bessere Arretierung der Erntebergungsvorrichtung auf dem Transportwagen gewährleistet.

Nach einem weiteren Merkmal der Erfindung ist es vorteilhaft, daß an mindestens zwei Lagerböcken je ein in etwa horizontal verlaufender Führungsteil mit einem vertikal verlaufenden Anschlagteil angeschlossen ist, wobei der Führungsteil mit dem Anschlagteil über seitliche Anschläge verbindbar ist. Durch die Verwendung der Führungs- und Anschlagteile läßt sich auf einfache Weise die Erntebergungsvorrichtung auf dem Transportwagen ausrichten, wobei die seitlichen Anschläge die seitliche Ausrichtung der Erntebergungsvorrichtung gegenüber dem Transportwagen unterstützen.

Nach einem anderen Merkmal der Erfindung ist es vorteilhaft, daß an mindestens einem dem den Führungsteil aufnehmenden Lagerbock gegenüberliegenden Lagerbock ein U-förmiger Anschlagteil vorgesehen ist, gegen den ein Querträger der Erntebergungsvorrichtung zur Anlage bringbar ist und der zur Aufnahme eines Steckbolzens dient, der in am Querträger vorgesehenen Laschen verschiebbar aufgenommen ist. Vorteilhaft ist es außerdem, daß am U-profilförmigen Querträger der Erntebergungsvorrichtung ein Mähwerksbalken angeordnet ist, der sich beim Absenkvorgang gegen den Anschlagteil bzw. den Führungsteil anlegt und zumindest um einen dieser Teile schwenkt, wobei der Querträger auf die Laschen des Transportwagens aufschiebbar ist, bis durch weiteres Absenken der an der Unterseite der Erntebergungsvorrichtung vorgesehene Querträger gegen einen oder mehrere auf der Oberseite der Lagerböcke vorgesehene Anschlagteile zur Anlage kommt, und daß die am Transportwagen vorgesehenen Laschen in verschiedenen Stellungen feststellbar sind. Durch die Verwendung der einstellbaren Laschen ist es möglich, nach Ablage der Erntebergungsvorrichtung auf dem Transportwagen eine spielfreie Verbindung zwischen der Erntebergungsvorrichtung und dem Transportwagen sicherzustellen.

In der Zeichnung ist ein Ausführungsbeispiel eines Transportwagens zur Aufnahme einer Erntebergungsvorrichtung nach der Erfindung schematisch dargestellt. Es zeigt :

Figur 1 eine schematische Darstellung eines Mähdreschers in Seitenansicht,

Figur 2 einen Transportwagen in perspektivischer Darstellung,

Figur 3 einen Teillängsschnitt durch einen Transportwagen zur Aufnahme der nur teilweise dargestellten Erntebergungsvorrichtung, wobei ein Kupplungsteil zusätzlich in der Ansicht von oben dargestellt ist,

Figur 4 eine Teilrückansicht einer Verriegelungsvorrichtung zur Befestigung der Erntebergungsvorrichtung auf dem Transportwagen.

In der Zeichnung ist mit 10 ein Gehäuse eines Mähdreschers 12 bezeichnet, der mit vorderen Laufrädern 14 und hinteren steuerbaren Laufrädern 16 ausgerüstet ist. Der Mähdrescher 12 weist ferner eine Fahrerkabine 18 auf, an die sich ein Sammelbehälter 19 anschließt. Am vorderen Ende des Mähdreschers 12 ist ein Schrägfördergehäuse 20 mit einer Erntebergungsvorrichtung 22 angeschlossen. Die Erntebergungsvorrichtung 22 kann mit in der Zeichnung nicht dargestellten Fangausnehmungen ausgerüstet sein, in die am Schrägfördergehäuse 20 vorgesehene Kupplungselemente von unten her eingreifen und die Erntebergungsvorrichtung 22 aufnehmen. Im Bereich der vorderen unteren Kante des Schrägfördergehäuses 20 wird über ebenfalls nicht dargestellte Kupplungselemente die Erntebergungsvorrichtung zusätzlich am Schrägfördergehäuse 20 festgelegt.

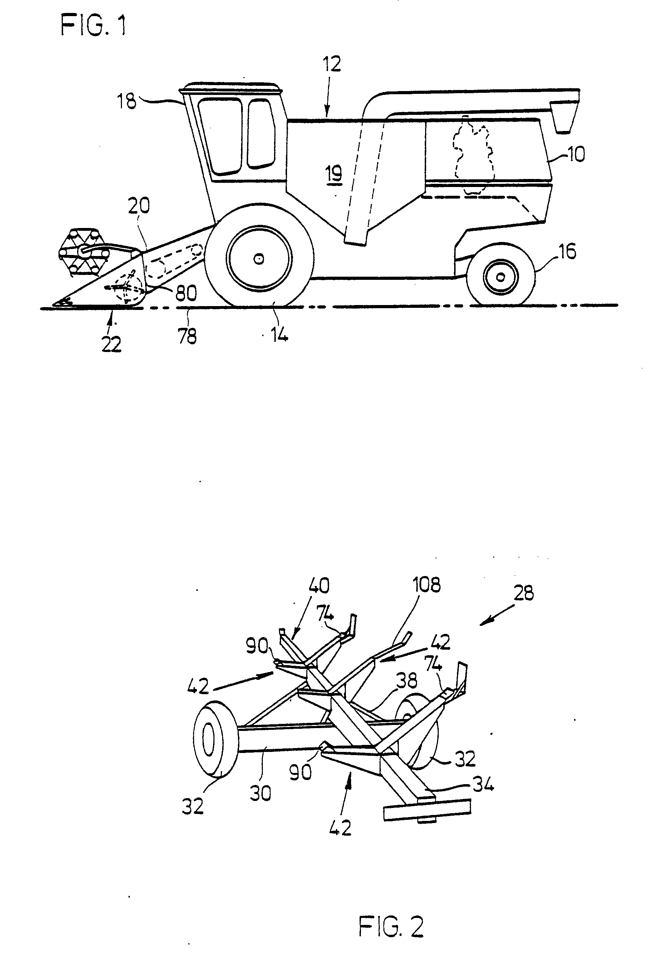

In Fig. 2 ist ein Transportwagen 28 zur Aufnahme der Erntebergungsvorrichtung 22 dargestellt, der aus einem Querträger 30 besteht, an dem zwei Laufräder 32 angeschlossen sind. Auf dem Querträger 30 lagert ein Längsträger 34, der einen rechteckförmigen Querschnitt aufweist. Der Längsträger 34 kann mit dem Querträger 30 fest verschweißt oder über Schraubenbolzen lösbar verbunden sein. Zusätzliche Streben 38 dienen zur weiteren Verbindung des Längsträgers 34 mit dem Querträger 30. Am vorderen Ende des Längsträgers 34 ist eine Kupplungsvorrichtung 40 vorgesehen, die zum Anschluß des Transportwagens 28 an den Mähdrescher 12 dient.

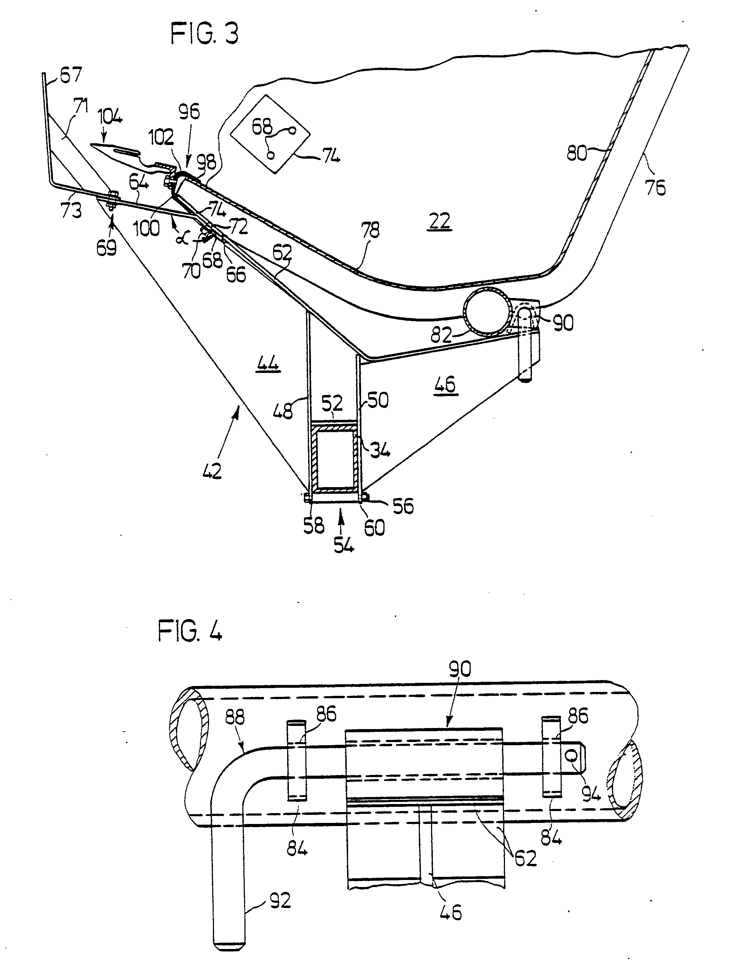

Auf dem Längsträger 34 sind drei mit Abstand zueinander angeordnete Tragvorrichtungen 42 angeordnet, die zur Aufnahme der Erntebergungsvorrichtung 22 dienen. Eine jede Tragvorrichtung 42 besteht (Fig. 3) aus einem linken geneigt verlaufenden Lagerbock 44 und einem rechten etwas weniger geneigt verlaufenden kürzeren Lagerbock 46, der mit dem linken Lagerbock 44 einteilig verbunden sein kann. Die beiden Lagerböcke 44 und 46 bilden eine V-förmige Mulde, die der Außenkontur der Erntebergungsvorrichtung 22 angepaßt ist. Der Lagerbock 44 weist eine vertikal verlaufende, innenliegende Stirnseite 48 auf, die mit Abstand zu einer vertikal verlaufenden Stirnseite 50 des Lagerbockes 46 angeordnet ist. Die beiden Stirnseiten 48 und 50 sind über einen horizontal verlaufenden Steg 52 miteinander fest verbunden. Die unteren Enden der Stirnseiten 48 und 50 bilden zusammen mit dem Steg 52 eine Fangausnehmung 54, die auf den Längsträger 34 aufschiebbar und mittels eines Schraubenbolzens 56 sicherbar ist, der in in den Stirnseiten 48 und 50 vorgesehene Bohrungen 58 und 60 einschiebbar ist. Auf der Oberkante des Lagerbockes 44 und 46 ist eine Lagerplatte 62 angeordnet, die ebenfalls fest mit den beiden Lagerböcken 44 und 46 verbunden ist und eine starre Verbindung zwischen den beiden Lagerböcken gewährleistet. Die Lagerplatte 62 ist V-förmig ausgebildet und dient zur Lagerung der Erntebergungsvorrichtung 22.

Am linken oberen Ende des Lagerbockes 44 ist ein geneigt verlaufender Führungsteil 64 mit einem vertikal verlaufenden Anschlagteil 67 angeordnet, der mit dem Lagerbock 44 fest verbunden, beispielsweise verschweißt, ist. Der Anschlagteil 67 ist über je einen seitlichen Anschlag 71 mit dem einen horizontal verlaufenden Schenkel 73 des Anschlagteiles 67 versteift. Der Schenkel 73 ist über einen Schraubenbolzen 69 mit dem Führungsteil 64 lösbar verbunden. Der Führungsteil 64 weist, wie Fig. 2 zeigt, in etwa die gleiche Breite wie die Lagerplatte 62 auf. Das untere Ende des Führungsteiles 64 weist eine Lasche 66 auf, die mit dem Führungsteil 64 einen nach unten offenen und stumpfen Winkel $\alpha$ bildet. Die Lasche 66 ist mit einer Bohrung 68 versehen, die auch als Langlochbohrung ausgebildet sein kann und die zur Aufnahme eines Schraubenbolzens 70 dient, der in eine Gewindebohrung 72 einer Lasche 74 einschraubbar ist. Die Lasche 74 liegt mit ihrer Unterseite plan gegen die Lasche 66 des Führungsteiles 64 an und ist über die Lasche 66 hinaus nach vorne zum Anschlagteil 67 hin verlängert. Das untere Ende der Lasche 74 endet mit kurzem Abstand vor dem unteren Ende der Lasche 66, auf dem das obere Ende der Lagerplatte 62 aufliegt. Auf diese Weise verläuft die Lasche 74 sowie der linke Schenkel der Lagerplatte 62 in der gleichen geneigt verlaufenden Ebene. Sie bilden somit eine durchgehende Lagerfläche für die Erntebergungsvorrichtung 22.

Die Erntebergungsvorrichtung 22 ist in Fig. 3 lediglich teilweise dargestellt. Sie weist V-förmig ausgebildete Rahmenteile 76 auf, an die ein Boden 78 und eine Rückwand 80 (Fig. 1) anschließbar sind. In Fig. 3 ist lediglich ein Rahmenteil 76 dargestellt. Jedoch weist die Ernte-

bergungsvorrichtung 22 mehrere mit Abstand zueinander angeordnete Rahmenteile auf. Die einzelnen Rahmenteile 76 sind über einen rohrförmigen Querträger 82 fest miteinander verbunden.

Wie aus Fig. 3, insbesondere Fig. 4 hervorgeht, sind an der Rückseite des Querträgers 82 zwei mit Abstand zueinander vorgesehene Laschen 84 angeordnet, die mit je einer Bohrung 86 versehen sind, in denen ein Steckbolzen 88 mit einem Handgriff 92 verschiebbar aufgenommen ist. Zwischen den beiden Laschen 84 befindet sich ein U-förmiger Anschlagteil 90, der mit seinen beiden Schenkeln an die Oberfläche der Lagerplatte 62 angeschlossen ist. Zwischen den beiden Schenkeln des Anschlagteiles 90 kann der Steckbolzen 88 eingeführt werden. Der horizontal verlaufende Teil des Steckbolzens 88 ist endseitig mit einer Bohrung 94 zur Aufnahme eines in der Zeichnung nicht dargestellten Federsteckers versehen, der zur Sicherung des Steckbolzens 88 dient.

Am stirnseitigen Ende des Rahmenteiles 76 der Erntebergungsvorrichtung 22 befindet sich ein U-profilförmiger Querträger 96, der als Kupplungsteil ausgebildet ist. Der Querträger 96 weist einen oberen mit einem Rahmenteil 76 verbindbaren Schenkel 98 sowie einen über einen Stegteil 102 verbundenen unteren Schenkel 100 auf, der in der Transportstellung der Erntebergungsvorrichtung 22 auf dem Transportwagen 28 die Lasche 74 von unten her umgreift und somit die Erntebergungsvorrichtung auf dem Transportwagen festlegt. Am Stegteil 102 des Querträgers 96 ist eine Schneidwerksvorrichtung bzw. ein Mähwerksbalken 104 lösbar angeschlossen.

An der mittleren Tragvorrichtung 42 ist ein Anzeigestab 108 vorgesehen, der der Bedienungsperson beim Ablegen der Erntebergungsvorrichtung 22 auf den Transportwagen 28 einen Anhaltspunkt gibt und anzeigt, ob die Erntebergungsvorrichtung mit Bezug auf den Transportwagen 28 seitlich versetzt ist. Soll die Erntebergungsvorrichtung 22, die am Schrägfördergehäuse 20 angeschlossen ist, auf den Transportwagen 28 abgelegt werden, so fährt hierzu der Mähdrescher 12 mit der Erntebergungsvorrichtung 22 an den Transportwagen 28 so weit heran, bis die Schneidwerksvorrichtung 104 an den am Führungsteil 64 befestigten Anschlagteil 67 zur Anlage kommt. Danach läßt sich das Schrägfördergehäuse 20 etwas absenken, so daß die Schneidwerksvorrichtung 104 mit ihrer Unterseite auf der Oberseite des Führungsteiles 64 zuerst aufliegt und um diese Anlagestelle schwenkt, bis der untere Schenkel 100 des Querträgers 96 in etwa die gleiche Lage einnimmt wie die Lasche 74. Danach stößt der Mähdrescher 12 ein wenig zurück, so daß der Schenkel 100 die Lasche 74 von unten her umgreift und dabei die Erntebergungsvorrichtung 22 auf dem Transportwagen 28 festlegt. Nunmehr kann das Schrägfördergehäuse 20 so weit abgesenkt werden, bis der Querträger 82 auf der Oberfläche der Lagerplatte 62 und gegen die Stirnseite des Anschlagteils 90 zur Anlage kommt. Hierdurch werden die beiden Laschen 84 mit ihren Bohrungen 86 so zum Anschlagteil 90 ausgerichtet, daß der Steckbolzen 88 in die Bohrungen 86 und zwischen die beiden Schenkel des Anschlagteiles 90 eingeführt werden kann, der in seiner Arretierungsstellung zusätzlich über den nicht dargestellten Federsplint gesichert wird. Da die an den Lagerböcken 44 vorgesehenen Laschen 74 einstellbar ausgebildet sind, kann die Lasche 74 so weit nach unten oder oben auf der Lasche 66 verschoben werden, bis die beiden Bohrungen 86 der Laschen 84 genau zum Anschlagteil 90 ausgerichtet sind. Das genaue Ausrichten der Lasche 74 auf dem Lagerbock 44 braucht jedoch lediglich bei der Anfangsmontage der Laschen 74 auf dem Lagerbock 44 vorgenommen zu werden. Ein Nachjustieren der Lasche 74 auf dem Lagerbock 44 ist jedoch jederzeit möglich. Nachdem der Steckbolzen 88 in seine Arretierungsstellung verschoben worden ist, ist der Ankupplungsvorgang für die Erntebergungsvorrichtung 22 am Transportwagen 28 beendet. Das Abnehmen der Erntebergungsvorrichtung 22 vom Transportwagen 28 erfolgt in der umgekehrten Reihenfolge der einzelnen Arbeitsschritte.

## Patentansprüche

1. Transportwagen (28) zur Aufnahme einer Erntebergungsvorrichtung (22) von Erntemaschinen, insbesondere Mähdrescher (12), mit auf einem Längsträger (34) angeordneten, muldenförmig ausgerichteten Lagerböcken (44, 46), auf die die Erntebergungsvorrichtung (22) ablegbar und mittels eines Kupplungsteiles sicherbar ist, dadurch gekennzeichnet, daß zumindest an einem feststehenden Teil des Transportwagens ein als aufwärts geneigte Lasche (74) ausgebildeter Kupplungsteil derart angeordnet ist, daß er beim Absenkvorgang der Erntebergungsvorrichtung mit einem U-profilförmigen, als Querträger (96) ausgebildeten Gegenstück selbsttätig verbindbar ist, das mit einem Schenkel an die Erntebergungsvorrichtung angeschlossen ist und mit seinem anderen Schenkel den Kupplungsteil von oben her untergreift.

2. Transportwagen nach Anspruch 1, dadurch gekennzeichnet, daß an zwei mit Abstand zueinander angeordneten, auf dem Transportwagen (28) vorgesehenen Lagerböcken (44) je ein als Lasche (74) ausgebildeter Kupplungsteil angeordnet ist, auf den je ein an der Erntebergungsvorrichtung (22) vorgesehenes U-förmiges Gegenstück aufschiebbar ist.

3. Transportwagen nach den Ansprüchen 1 und 2, dadurch gekennzeichnet, daß das U-förmige Gegenstück im Bereich der Einlaßseite der Erntebergungsvorrichtung (22) und die zugehörige Lasche (74) im Bereich des äußeren Endes des entsprechenden Lagerbockes (44) angeordnet sind.

4. Transportwagen nach einem oder mehreren der vorherigen Ansprüche, dadurch gekennzeichnet, daß an mindestens zwei Lagerböcken (44) je ein in etwa horizontal verlaufender Führungsteil (64) mit einem vertikal verlaufenden Anschlagteil (67) angeschlossen ist, wobei der Führungsteil (64) mit dem Anschlagteil (67) über seitliche -Anschläge (71) verbindbar ist.

5. Transportwagen nach einem oder mehreren der vorherigen Ansprüche, dadurch gekennzeichnet, daß an mindestens einem dem den Führungsteil (64) aufnehmenden Lagerbock (44) gegenüberliegenden Lagerbock (46) ein U-förmiger Anschlagteil (90) vorgesehen ist, gegen den ein Querträger (82) der Erntebergungsvorrichtung (2-2) zur Anlage bringbar ist und der zur Aufnahme eines Steckbolzens (88) dient, der in am Querträger (82) vorgesehenen Laschen (84) verschiebbar aufgenommen ist.

6. Transportwagen nach einem oder mehreren der vorherigen Ansprüche, dadurch gekennzeichnet, daß am U-profilförmigen Querträger (96) der Erntebergungsvorrichtung (22) ein Mähwerksbalken (104) angeordnet ist, der sich beim Absenkvorgang gegen den Anschlagteil (67) bzw. den Führungsteil (64) anlegt und zumindest um einen dieser Teile schwenkt, wobei der Querträger (96) auf die Laschen (74) des Transportwagens (28) aufschiebbar ist, bis durch weiteres Absenken der an der Unterseite der Erntebergungsvorrichtung (22) vorgesehene Querträger (82) gegen einen oder mehrere auf der Oberseite der Lagerböcke (46) vorgesehene Anschlagteile (90) zur Anlage kommt.

7. Transportwagen nach einem oder mehreren der vorherigen Ansprüche, dadurch gekennzeichnet, daß die am Transportwagen (28) vorgesehenen Laschen (74) in verschiedenen Stellungen feststellbar sind.

### Claims

1. Transport carriage (28) for accommodating a crop pick-up attachment (22) for harvesting machines, in particular a combine harvester (12), having bearing brackets (44, 46) arranged on a longitudinal beam and aligned in the form of a trough and on which the crop pick-up attachment (22) can be deposited and secured by means of a coupling element, characterised in that a coupling element in the form of an upwardly inclined cover plate (74) is so arranged on at least one fixed part of the transport carriage that, on the lowering operation of the crop pick-up attachment, it is automatically connectable to a counter piece of channel-section shape and in the form of a cross support (96), the counter piece being connected by one side thereof to the crop pick-up attachment and having its other side engaging from above below the coupling element.

2. Transport carriage according to claim 1, characterised in that on each of two bearing brackets (44) arranged at a distance from one another and provided on the transport carriage (28) there is arranged a coupling element in the form of a cover plate (74) over which in each case a U-shaped counter piece provided on the crop pick-up attachment (22) can be pushed.

3. Transport carriage according to claims 1 and 2, characterised in that the U-shaped counter piece is arranged in the region of the intake side of the crop pick-up attachment (22) and the associated cover plate (74) is arranged in the region of the outer end of the corresponding bearing bracket (44).

4. Transport carriage according to one or more of the preceding claims, characterised in that a roughly horizontally extending guide element (64) with a vertically extending abutment element (67) is connected to each of at least two bearing brackets (44), the guide element (64) being connectable to the abutment element (67) *via* lateral stays (71).

5. Transport carriage according to one or more of the preceding claims, characterised in that on at least one bearing bracket (46) disposed opposite the bearing bracket (44) receiving the guide element (64) there is provided a U-shaped abutment element (90) against which a cross support (82) of the crop pick-up attachment (22) can be brought to bear and which serves to receive a linch pin (88) slidably accommodated in lugs (84) provided on the cross support (82).

6. Transport carriage according to one or more of the preceding claims, characterised in that on the channel-section shaped cross support (96) of the crop pick-up attachment (22) there is arranged a cutting bar (104) which is applied against the abutment element (67) and/or the guide element (64) on the lowering operation and swings about at least one of these parts, the cross support (96) being adapted to be pushed over the cover plates (74) of the transport carriage (28) until, by further lowering, the cross support (82) provided on the underside of the crop pick-up attachment (22) comes to bear against one or more abutment elements (90) provided on the top of the bearing brackets (46).

7. Transport carriage according to one or more of the preceding claims, characterised in that the cover plates (74) provided on the transport carriage (28) can be fixed in different positions.

### Revendications

1. Chariot de transport (28) pouvant recevoir un ensemble de récolte (22) de machines de récolte, en particulier de moissonneuses-batteuses (12), comportant des supports formant berceaux (44, 46) agencés en forme de cuvettes disposés sur une poutre formant longeron (34), sur lesquels l'ensemble de récolte (22) peut être déposé et être fixé au moyen d'un organe d'accouplement, caractérisé en ce qu'un organe d'accouplement conformé en patte (74) inclinée vers le haut est disposé sur au moins une partie fixe du chariot de transport de façon telle que, lors de l'opération de descente de l'ensemble de récolte, il puisse être relié automatiquement à une pièce antagoniste profilée en U, réalisée sous la forme d'une traverse (96), qui est rattachée par une branche à l'ensemble de récolte et s'accroche par le haut, par son autre branche, sous l'organe d'accouplement.

2. Chariot de transport selon la revendication 1, caractérisé en ce qu'il comporte sur chacun de deux supports d'appui (44) écartés l'un de l'autre, prévus sur le chariot de transport (28), un organe d'accouplement respectif conformé en patte (74), sur lequel peut s'engager par coulissement une pièce antagoniste en U respective prévue sur l'ensemble de récolte (22).

3. Chariot de transport selon les revendications 1 et 2, caractérisé en ce que la pièce antagoniste en U est disposée au voisinage du côté d'entrée de l'ensemble de récolte (22), et en ce que la patte correspondante (74) est disposée au voisinage de l'extrémité extérieure du support d'appui correspondant (44).

4. Chariot de transport selon une ou plusieurs des revendications précédentes, caractérisé en ce qu'à chacun d'au moins deux supports d'appui (44) se rattache un élément de guidage (64) respectif comportant un élément de butée vertical (67), l'élément de guidage (64) pouvant être relié à l'élément de butée (67) par des butées latérales (71).

5. Chariot de transport selon une ou plusieurs des revendications précédentes, caractérisé en ce qu'il est prévu, sur au moins un support de berceau (46) opposé au support de berceau (44) recevant la partie de guidage (64), une pièce de butée en forme d'U (90), contre laquelle une traverse (82) de l'ensemble de récolte (22) peut venir s'appliquer et qui sert à la réception d'une broche (88) montée de façon coulissante dans des pattes (84) prévues sur la traverse (82).

6. Chariot de transport selon une ou plusieurs des revendications précédentes, caractérisé en ce qu'il est prévu, sur la traverse profilée en forme d'U (96) de l'ensemble de récolte (22), une poutre de mécanisme de coupe (104) qui, lors de l'opération de dépose, vient s'appliquer contre l'élément de butée (67) ou l'élément de guidage (64), et qui fait basculer l'un au moins de ces éléments, la traverse (96) pouvant être engagée sur les pattes (74) du chariot de transport (28) jusqu'à ce que, lors d'un nouvel abaissement, la traverse (82) prévue sur la face inférieure de l'ensemble de récolte (22) vienne s'appliquer contre une ou plusieurs pièces de butée (90) prévues sur la face supérieure des supports (46).

7. Chariot de transport selon une ou plusieurs des revendications précédentes, caractérisé en ce que les pattes (74) prévues sur le chariot de transport (28) peuvent être immobilisées dans différentes positions.

FIG. 1

18
12
19
10
20
16
80
22 78 14

FIG. 2

40 108 28
74
90 42
42 38 74
32
90 32
32 30 34
42

FIG. 3

FIG. 4